# EUROPEAN PATENT SPECIFICATION

(11) **EP 2 927 510 B1**
(45) Date of publication and mention of the grant of the patent: **18.11.2020**
(21) Application number: 15162131.5
(22) Date of filing: 01.04.2015
(51) Int. Cl.: F16B 5/02

(54) **FASTENER**
BEFESTIGUNGSELEMENT
ELÉMENT DE FIXATION

(30) Priority: 01.04.2014 DE 102014104597
(43) Date of publication of application: 07.10.2015
(73) Proprietor: AUDI AG, 85045 Ingolstadt (DE)
(72) Inventor: Kempf, Christian, 35394 Gießen (DE); Rosemann, Frank, 35394 Gießen (DE); Ries, Thorsten, 74722 Buchen (DE); Wenk, Max, 74821 Mosbach (DE)
(74) Representative: Haar, Lucas Heinz Jörn

(56) References cited:
- WO-A1-2012/012312
- DE-A1-102010 011 874
- DE-U1-202012 001 602

## Description

The invention concerns a fastener for fastening an attached part or trim part provided with an opening to a stud of a support part, having a supporting body that has a hole extending along an axis and is provided at one end with an insertion opening to accommodate the stud, and that has a flange projecting outward from the supporting body.

Fasteners of the specified type are primarily used in automotive manufacture for fastening attached parts or trim parts to the car body or to body components. In this context, it should be as simple as possible to carry out the fastening, and the requirement frequently exists to carry out the fastening in such a manner that vibrations and structure-borne noise at the fastening location are not transmitted from one component to the other. In addition, the fastener must meet requirements concerning the magnitude of the assembly and disassembly force, impermeability, compensation of dimensional variations of the parts, and the possibility of repeated assembly.

Known from US 4 358 098 is a fastener of the specified type made of plastic that comprises a sleeve that can be fastened to a threaded stud, a flange arranged at one end of the sleeve, and a hexagonal head to accommodate placement of a tool. The sleeve of the fastener extends through a shock-absorbing rubber bushing, which is arranged in the fastening opening of a plate-like component, which is attached to a stud of a support component with the aid of the fastener. This prior art shock-absorbing fastening requires separate installation of two different parts. This is cumbersome and fairly time-consuming.

Known from EP 2 131 084 A2 is a fastener designed for fastening a component to a stud, in which the hole for accommodating the stud contains at least one catch and at least one guide that both engage with the stud. The fastener is intended for fastening piping or wiring, and to this end has U-shaped retaining regions that are lined on the inside with a lining made of an elastomeric plastic. In addition, on the side of the fastener's body where the insertion opening of the hole is located, the fastener is provided with support elements made of elastomeric plastic, by which means the fastener can be supported on a base.

EP 1 729 387 A2 discloses a fastening device with C-shaped retaining regions for attaching hydraulic and electrical lines in motor vehicles, in which a reinforcement part made of plastic is completely enveloped in a plastic layer with the exception of a stud fastening section. In this design, the plastic of the reinforcement part is harder than the plastic layer, which functions as a vibration damper and is intended to decouple the fastened lines from vibrations of the vehicle body.

DE 20 2012 001 602 U1 discloses a device for connecting parts of a vehicle via a connecting element and a separate acoustic decoupling element.
The object of the invention is to create a one-piece, economically manufactured, and easily installed fastener of the initially mentioned type that allows vibration-isolating or sound-isolating fastening of an attached part or trim part to a stud of a support part.

The object is attained according to the invention by a fastener with the features specified in claim 1. Advantageous embodiments of the invention are specified in the dependent claims.

According to the invention, the fastener for fastening an attached part or trim part provided with an opening to a stud of a support part comprises a supporting body, which has a hole extending along an axis that is provided at one end with an insertion opening to accommodate the stud, and has a flange projecting outward from the supporting body; and comprises a damping element, which covers the flange on the side facing the insertion opening with a contact section and has, extending from the contact section in the axial direction beyond the end of the supporting body that forms the edge of the insertion opening, an extension that is designed to project through the opening in the attached part or trim part.

The fastener according to the invention combines multiple functions in a single part. It allows simple assembly by pushing, hammering, or screwing it onto an externally threaded stud of the support part, with high retention forces being achievable. After installation, the extension of the damping element, which engages in the opening of the attached part or trim part, and the contact section of the damping element together form an isolator that wraps around the edge of the opening on both sides, preventing direct contact of the attached part or trim part with the support part and the stud, and counteracting sound transmission between the attached part and the support part. The fastener according to the invention can be disassembled by unscrewing and, if it is not damaged, can be used for assembly again.

According to the invention, the supporting body is made of a rigid plastic and the damping element is made of a flexible, elastomeric plastic or rubber and is connected to the supporting body by primary forming. In this way, the fastener can be manufactured easily and economically, with the rigid plastic achieving high retention forces and the flexible plastic or rubber providing effective vibration isolation. An embodiment in which the damping element surrounds the flange with a layer on all sides is especially advantageous. In this way, good anchoring of the damping element on the support part is achieved.

According to the invention, the contact section of the damping element has a flat surface on the side facing the insertion opening on which are located multiple raised contact ribs that are spaced apart from one another. The contact ribs reduce the contact area between the fastener and the attached part or trim part to be retained, and thereby increase the elastic deformability of the contact section in the axial direction. As a result, the contact section can adapt better to irregularities in the surface of the attached part or trim part and compensate for manufacturing-related dimensional deviations in the thickness of the attached part or trim part through deformation.

In a first advantageous embodiment of the invention, the extension of the damping element can take the form of a wall with a cylindrical lateral surface that has an end region divided by slots running in the axial direction. During installation of the fastener, the slotted end region of the wall can be pushed radially outward by contact with the support part into a region that surrounds the opening of the attached part or trim part on the side facing the support part. When this occurs, the extension forms an annular intermediate layer between the support part and the attached part or trim part that prevents direct contact between the parts and damps the transmission of vibrations on account of its material properties.

In order to facilitate radially outward deformation of the wall, at least one groove running in the circumferential direction can be arranged in the cylindrical lateral surface of the slotted end region of the wall at a distance from the free end of the wall. In addition, the inner surface of the wall in the end region extending beyond the end of the supporting body can have a conical section whose inside diameter increases with increasing distance from the end of the supporting body. As a result of the conical section of the inner surface, the places where the end of the extension contacts the support part during installation are displaced radially outward, resulting in a bending moment directed radially outward that supports the radial deformation of the extension.

According to another proposal of the invention, the extension can have a guide section that adjoins the contact section and surrounds an end section of the supporting body, and a support section that protrudes from the end of the supporting body in the axial direction. The guide section can have a cylindrical lateral surface from which project multiple centering knobs arranged at a distance from one another. In advantageous fashion, the centering knobs form a support that is resilient in the radial direction for the edge of the opening of the attached part or trim part, thus making it possible to compensate for any deviation in the position of the stud or of the opening in the attached part or trim part from the exact centered position.

In an advantageous fashion, the support section can form an annular flange, which extends radially outward from the guide section and has a support surface located opposite the contact section, and on the opposite side has a truncated conical surface tapering toward the free end of the support section. Due to this design of the support section, the fastener can be preinstalled in the opening of an attached part or trim part by the means that the support section, with its truncated conical surface foremost, is pressed into the opening of an attached part or trim part, wherein the maximum outside diameter of the truncated conical surface is larger than the inside diameter of the opening by an amount that still permits installation. After installation, the support surface of the support section then secures the fastener against the attached part or trim part, with the centering knobs causing the fastener to be centered in the opening, which is advantageous for further assembly.

On the side opposite the support surface, the annular flange can have a flat face that has multiple raised contact ribs. When the fastener is installed on the stud, the annular flange is supported on the support part by the contact ribs. In this way, the contact ribs increase the flexibility of the support that the annular flange provides and that separates the parts from one another.

According to another proposal of the invention, radially outward extending tabs can be located on at least two diametrically opposed sides of the annular flange. The tabs are suitable for preassembly of the fastener with an attached part or trim part that is provided with an oblong hole. In one position of the fastener, the tabs can be introduced into the oblong hole. Then the fastener is rotated by 90°, causing the tabs to engage with the longitudinal edges of the oblong hole and thereby pulling the annular flange through the opening in the attached part or trim part. The tabs can also facilitate installation in a round hole by the means that the tabs are bent toward one another and inserted into the round hole, wherein the annular flange can subsequently be pulled through the opening by pulling on the ends of the tabs that project through the round opening, for example using a tool.

When the fastener is in the fastened position, the tabs can serve to produce an axial force by which the joined parts are held at a distance from one another, with it being possible to vary the size of the axial force through the choice of the number and shape of the tabs. It is advantageous in this design if the tabs are inclined toward a plane perpendicular to the axis such that their distance from the contact section increases radially towards the outside.

According to another advantageous embodiment of the invention, the support section can take the form of an annular disk that is interrupted at one point by a radial slot and is shaped in the manner of a helical surface, wherein the spread-apart edges of the slot form an opening for the introduction of the edge of an opening of an attached part or trim part. The helical design of the support section allows for simple preassembly of the fastener by screwing it into the opening of the attached part or trim part. Once the fastener is installed on the support part, the annular disk forms a plate located between the connected parts that is elastically preloaded and that tends to press apart the parts that are in contact with it.

According to another proposal of the invention, the supporting body can be provided with an annular disk arranged at a distance from the flange and surrounding the edge of the insertion opening, which disk is interrupted at one point by a slot and is shaped in the manner of a helical surface, wherein the edges of the slot form an opening for the introduction of the edge of the opening of an attached part or trim part. In this design, the side of the annular disk facing the flange can be covered with an outer layer composed of the damping element. In this embodiment, the annular disk has greater stiffness and can clamp the attached part or trim part against the contact section with a greater axial preloading force.

Provision can additionally be made according to the invention for the annular disk in both variant embodiments to be separably attached to the fastener in such a manner that it tears off and remains on the stud when the fastener is unscrewed. Reinstallation can then take place in a simple manner with the part of the fastener that has separated from the annular disk.

According to the invention, the fastener can have a tool engagement region on the side of the flange facing away from the insertion opening so that the fastener can be screwed onto a threaded stud or unscrewed therefrom like a nut. The tool engagement region can have multiple, in particular six, flat side faces, and an end face that closes off the hole, in the manner of an equilateral, right prism, with each pair of side faces forming a longitudinal edge. Furthermore, it is advantageous for manufacturing the fastener if mutually communicating grooves that contain extensions of the damping element are formed in the end face and in at least one of the side faces. In this way, the damping element can be molded onto the supporting body starting from the end face.

The hole in the supporting body can have a smooth, cylindrical inner surface into which the thread ridges of the external thread of the stud can dig. To achieve higher retention forces, the hole can also be provide with a prefabricated internal thread. In addition, at least one locking finger and at least one guide surface located opposite the locking finger can be arranged in the hole in the supporting body. This embodiment has the advantage that the fastener can be pushed onto the stud with little force while a high retention force is nonetheless achievable.

Advantageous exemplary embodiments of the invention are shown in the drawings and are explained in detail below. The drawings show:
- Figure 1: a perspective view of the top of a first exemplary embodiment of a fastener according to the invention,
- Figure 2: a side view of the fastener from Figure 1,
- Figure 3: a perspective view of the bottom of the fastener from Figure 1,
- Figure 4: a cross-section of an assembly using a fastener from Figure 1,
- Figure 5: a perspective view of the top of a second exemplary embodiment of a fastener according to the invention,
- Figure 6: a perspective view of the bottom of the fastener from Figure 5,
- Figure 7: a side view of the fastener from Figure 5,
- Figure 8: a top view of the fastener from Figure 5,
- Figure 9: a cross-section of an assembly using a fastener from Figure 5,
- Figure 10: a perspective view of the bottom of a third exemplary embodiment of a fastener according to the invention,
- Figure 11: a side view of the fastener from Figure 10,
- Figure 12: a cross-section of an assembly using a fastener from Figure 10,
- Figure 13: a perspective view of the bottom of a fourth exemplary embodiment of a fastener according to the invention,
- Figure 14: a side view of the fastener from Figure 13,
- Figure 15: a side view, perpendicular to the side view in Figure 14, of the fastener from Figure 13,
- Figure 16: a partially cross-sectional side view of a fifth fastener according to the invention.

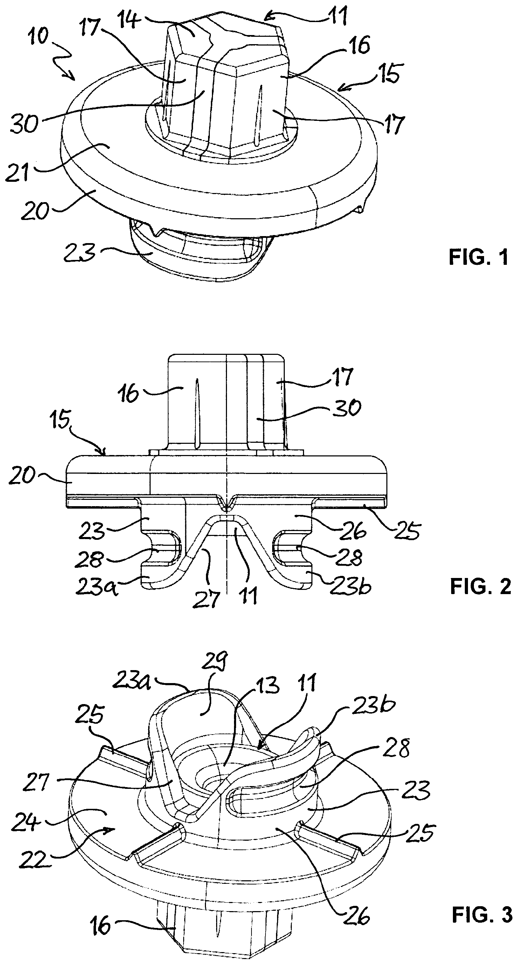

The fastener 10 shown in Figures 1 through 4 has a sleeve-shaped supporting body 11 with a hole 12 extending along an axis. The hole 12 has an insertion opening 13 at a bottom end of the supporting body 11, and at the opposing top end of the supporting body 11 is closed off by an end wall 14. The inner wall of the hole 12 is cylindrical, and the insertion opening 13 expands conically to the outside in order to facilitate insertion. On its external side, the supporting body 11 is provided with a flange 15 arranged at a distance from its ends that is in the form of a flat annular disk, and is intended to support an attached part or trim part to be fastened. Between the flange 15 and the bottom end containing the insertion opening 13, the supporting body 11 has a cylindrical lateral surface. On the other side of the flange 15, the supporting body 11 takes the form of an equilateral, right prism, which constitutes a tool engagement region 16 with six flat side faces 17 that are parallel to the axis.

In the vicinity of the flange 15 and the cylindrical lateral surface, the supporting body 11 is surrounded by a damping element 20 made of flexible, elastomeric plastic or rubber. The damping element 20 covers the top of the flange 15 with an outer layer 21, and on the bottom of the flange 15 forms a contact section 22, the inside edge of which is adjoined by an extension 23 that extends beyond the insertion end of the supporting body 11 in the axial direction. The contact section 22 has a flat contact surface 24 on which are formed multiple contact ribs 25 that project from the contact surface 24. The contact ribs 25 have a radial orientation and have a triangular profile, of which one side of the triangle lies in the plane of the contact surface 24.

The extension 23 has a cylindrical lateral surface 26 and is subdivided into two sections 23a, 23b by two diametrically opposed slots 27. The slots 27 run in the axial direction and their width increases with increasing distance from the contact section 22. Each section 23a, 23b of the extension 23 has, approximately in the center of its lateral surface 26, a groove running in the circumferential direction 28, promoting a radially outward deformation of the end region of the extension 23.

In the region of the extension 23 projecting from the supporting body 11, the sections 23a, 23b have inner surfaces 29 that are portions of a conical surface that diverges in the direction of the free end of the extension 23. In this way, the points of contact at the face ends of the sections 23a, 23b are displaced radially outward so that, when the extension 23 is pressed against a support part, a bending moment is produced in cooperation with the grooves 28, causing the sections 23a, 23b to be bent radially outward.

As can be seen in Figure 1, strip-like extensions 30 of the damping element 20 are located in the end wall 14 and in the side faces 17 of the tool engagement region 16. The extensions 30 are arranged in grooves 31 that are formed in the side faces 17 and in the end wall 14. The grooves 31 converge in the center of the end wall 14. The grooves 31 form feeders through which plastic is injected from a central injection point via the center of the end wall 14 into the injection mold containing the supporting body 11 during injection molding of the damping element 20, whence the plastic can be directed into the cavities of the injection mold. In this way, uniform and complete forming of the damping element 20 can be achieved in an advantageously short cycle time.

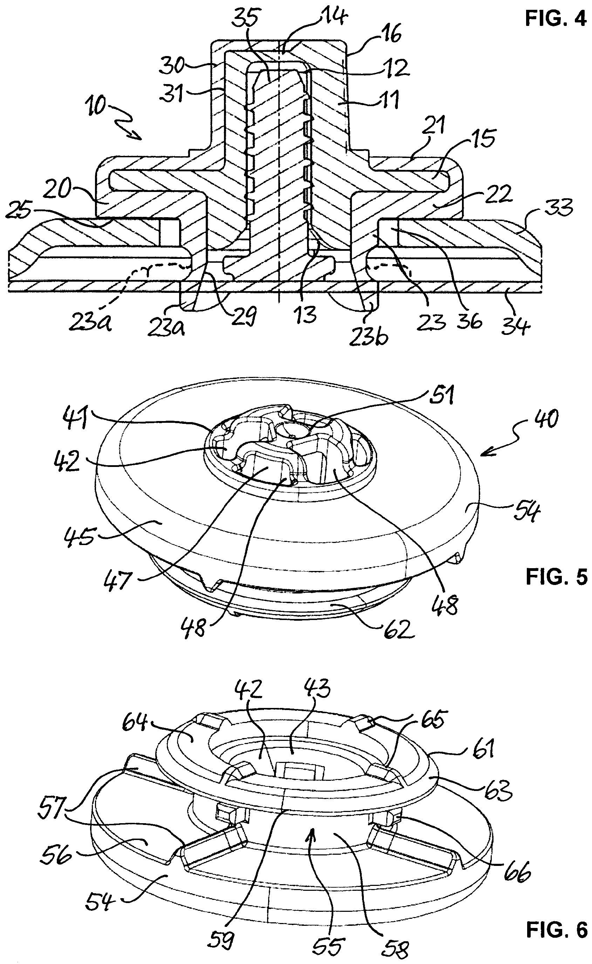

Figure 4 shows the fastening of an attached part 33 to a stud 35 projecting from a support part 34 using the fastener 10. In this process, the attached part 33 is first placed on the support part 34 such that the stud 35 passes through the opening 36 in the support part 34. Next, the fastener 10 is put on the externally threaded stud 35, and is then screwed onto the stud 35 using a driving tool gripping the tool engagement region 16. During this process, the apex of the thread ridge of the external thread digs into the inner surface of the hole 12, which is smaller in diameter, with the result that the fastener 10 is securely anchored by its supporting body 11 to the stud 35.

During the driving process, the extension 23 of the damping element 20 of the fastener 10 passes through the opening 36 of the attached part, and its end then strikes the support part 34. As the fastener 10 continues to approach the support part 34, the two sections 23a, 23b of the extension 23 separated by the slot 27 are pushed radially outward and thus deformed such that their ends enter the gap between the attached part 33 and the support part 34, forming a support that decouples the attached part 33 and the support part 34 from one another. Figure 4 shows the final position of the fastener 10 with the undeformed sections 23a, 23b overlapping the support part 34, and the deformed sections 23a, 23b indicated by dashed lines. On the side facing away from the support part 34, the attached part 33 bears against the contact ribs 25 of the contact section 22, and is thereby likewise acoustically decoupled from the stud 35 and the support part 34.

The fastener 10 can be removed from the stud 35 using a driving tool by rotation in the release direction, in which process the extension 23 of the damping element 20 again assumes its initial shape. Consequently, reinstallation of the fastener 10 is possible.

Figures 5 through 9 show another embodiment of a fastener 40 according to the invention. In a preassembly step prior to final fastening, this fastener can be connected to the attached part or trim part that will be fastened.

The fastener 40 has a supporting body 41 composed of a cylindrical sleeve with a hole 42, an insertion opening 43, and a flange 45 surrounding the supporting body 41. For the purpose of fastening the supporting body 41 to an externally threaded stud, elastic locking fingers 46 are arranged in the hole 42; these fingers extend from the insertion opening 43 in the insertion direction and towards the center. The locking fingers 46 are arranged at regular intervals from one another, and a support element 47 that is connected to the wall of the supporting body 41 by radial webs 48 is located opposite each locking finger 46. The support elements 47 have, on their inner side, a support surface 49 parallel to the axis, and are connected to one another at their ends opposite the insertion opening 43 by a radial stop element 51. At the insertion opening 43, the locking fingers 46 and the support elements 47 form lead-in bevels for the purpose of centering the stud during installation.

The fastener 40 has a damping element 54 that completely surrounds the flange 45, and an extension 55 that covers the supporting body 41 on the side of the flange 45 facing the insertion opening and projects beyond the supporting body 41. On the bottom of the flange 45 facing the insertion opening 43, the damping element 54 forms a contact section 56 having projecting contact ribs 57, a thin-walled, cylindrical guide section 58 that contacts the supporting body 41, and a support section 59 standing out from the supporting body 41 that extends radially outward from the guide section 58 and forms an annular flange 61 with a shoulder surface 62 opposite the contact section 56. On the side opposite the shoulder surface 62, the annular flange 61 has a truncated conical surface 63 that tapers away from the shoulder surface 62. A flat, annular end face 64 adjoins the smallest diameter of the truncated conical surface 63. The end face 64 is provided with multiple contact ribs 65 projecting therefrom that have a radial orientation and are arranged at uniform intervals from one another.

The guide section 58 has a cylindrical lateral surface from which project multiple centering knobs 66 that are spaced apart from one another and that are intended to center the fastener 40 in the opening of an attached part. The outside diameter measured at the centering knobs 66 is smaller than the outside diameter of the annular flange 61 and corresponds essentially to the smallest diameter of the truncated conical surface 63.

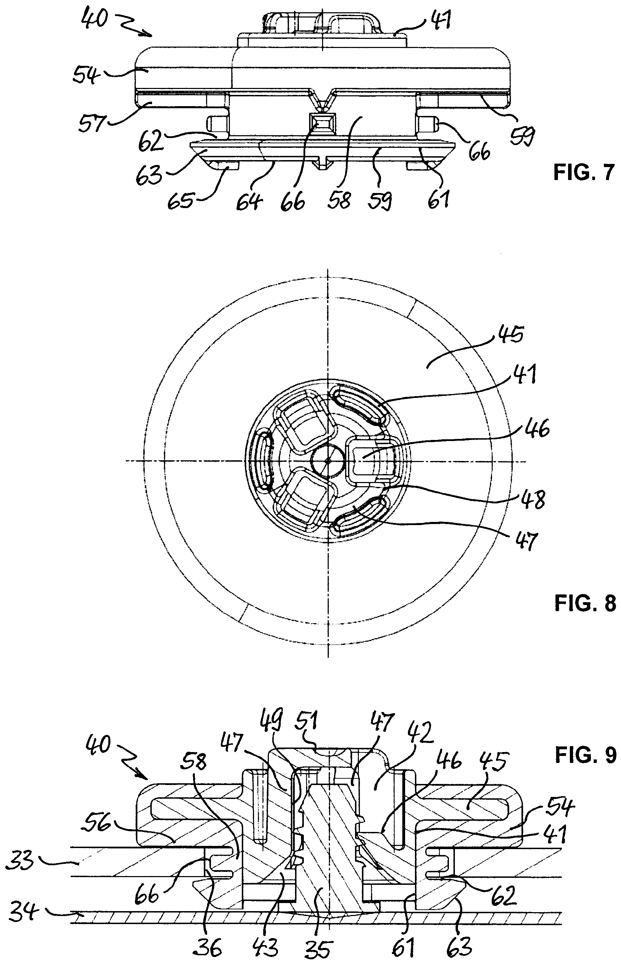

The fastener 40 can be connected in advance to an attached part, so that it forms a manageable assembly unit with the attached part. To this end, the annular flange 61 of the fastener 40 is pushed through the opening in the attached part. The outside diameter of the annular flange 61, which must be dimensioned larger than the inside diameter of the opening in the attached part in order to ensure a retention function that is adequate for preassembly, can be radially compressed by the interaction of the truncated conical surface 63 with the edge of the opening on account of the elasticity of the annular flange 61 and can be reduced in size sufficiently that it can be pushed through the opening. Once the annular flange 61 has passed through the opening in the attached part, it returns to its original shape and secures the fastener 40 to the attached part as a result of its larger outside diameter. As shown in Figure 9, the attached part 33 is then located with the edge of its opening 36 between the contact section 56 and the shoulder surface 62. In this position, the guide section 58 is located with the centering knobs 66 inside the opening 36, so that the centering knobs 66 can center the fastener 40 in the opening 36.

After preassembly, the preassembled unit consisting of the attached part 33 and fastener 40 can be fastened to a support part 34 by pressing the fastener 40 onto a stud 35. The stud entering the hole 42 is centered and axially guided by the support elements 47 in the fastener 40. In this process, the locking fingers 46 deflect radially outward and snap over the thread ridges of the stud thread. In the final position shown in Figure 9, at least one of the locking fingers braces against the flank surface of the thread ridge of the stud 35, thereby securing the fastener 40 on the stud 35. In addition, the fastener 40 is supported by the support elements 47 in the circumferential direction and is kept from tilting on the stud 35. In this final position, both the annular flange 61 and the contact section 56 of the damping element 54 can be compressed in the axial direction in order to achieve a zero-play, elastically preloaded fastening of the attached part 33 to the support part 34. The elastically preloaded fastening is promoted by the contact ribs 57 and 65, since they have relatively great spring travel for a moderate increase in force. Differences in the thickness of the attached part and the locking position of the fastener 40 can be compensated for in this way. In this way, the attached part 33, which is held only by the damping element 54, is efficaciously decoupled acoustically from the support part 34. The elasticity of the damping element 54 also contributes to compensation of tolerance-related dimensional deviations. Deviations in the centering position between the stud 35 and the opening 36 of the attached part 33 can be compensated for by the resilience of the centering knobs 66.

For disassembly, the fastener 40 can be unscrewed from the stud by rotation. The spaces above the locking fingers 46 in the hole 42, which are open at the top, are suitable for placement of a tool. The friction at the contact points between the fastener 40 and the attached part 33 prevents the fastener 40 from loosening on its own.

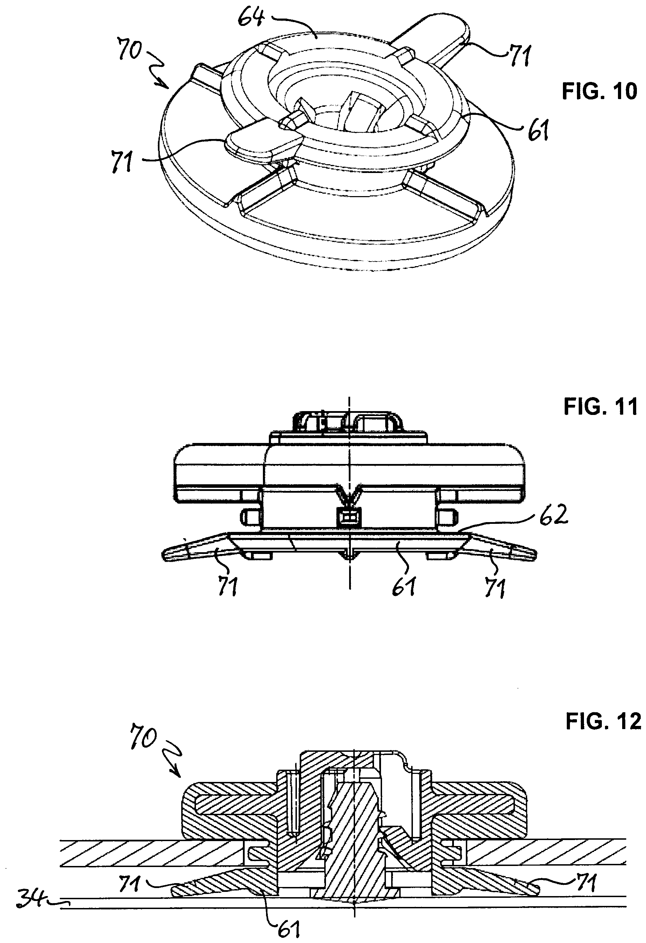

Figures 10 through 12 show a fastener 70 that differs from the fastener 40 by two tabs 71 that are located on diametrically opposed sides of the annular flange 61 and extend radially outward from the annular flange 61. In addition, the tabs 71 are inclined toward a radial plane containing the shoulder surface 62 such that their distance from this plane increases radially toward the outside. The thickness of the tabs 71 decreases somewhat from the inside to the outside in the radial direction. The width of the tabs 71 is essentially constant in the circumferential direction. Their radially outer ends are preferably round.

With the aid of the tabs 71, the fastener 70 can easily be inserted into an attached part's oblong hole whose width essentially corresponds to the outside diameter of the fastener 70 in the region of the centering knobs 66, but whose length is substantially longer. In this case, the fastener 70 can be inserted into the oblong hole with the tabs 71 oriented in the longitudinal direction of the oblong hole such that the tabs 71 are located on the back of the attached part. Next, the fastener 70 is rotated by 90°. In this process, the tabs 71 engage the longitudinal edges of the oblong hole, thereby pulling the annular flange 61 through the oblong hole to the back at the longitudinal edges. In this position, the fastener 70 is secured in the oblong hole by the annular flange 61 and the tabs. In the fastened position on a support part 34, as shown in Figure 12, the tabs 71 reinforce the spring action to axially preload the fastener 71 and the attached part relative to the support part. The size of the spring force achievable here can be adapted to different requirements by changing the size of the tabs 71 and/or their number.

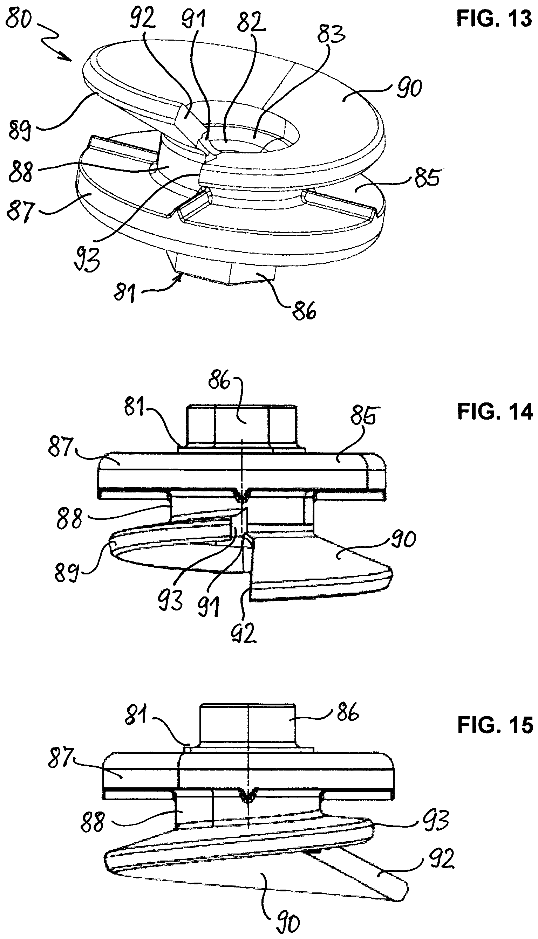

The fastener 80 shown in Figures 13 through 15 is designed to be installed by being screwed onto a stud, and can be connected in advance to the attached part by a simple rotating movement. In its design, the fastener 80 is largely identical to the fastener 10 and includes a supporting body 81 with a hole 82, an insertion opening 83, and a flange 85. With the exception of a tool engagement region 86 and the insertion end, the supporting body 81 and the flange 85 are surrounded by a damping element 87. On the side facing the insertion opening of the flange 85, the damping element 87 forms a cylindrical guide section 88 and an adjoining support section 89. The support section 89 takes the form of a flat annular disk 90, which is located opposite the flange 85. The annular disk 90 is interrupted at a single point by a radial slot 91, and is shaped in the manner of a helical surface in such a manner that the two edges 92, 93 of the slot 91 are inclined at different angles to the axis of the fastener 80, thereby forming an insertion opening that enlarges radially to the outside. For preassembly with an attached part, the fastener 80 can be inserted by means of the annular disk 90 into the opening of the attached part in such a manner that the edge of the opening engages in the insertion opening formed by the slot 91. If the fastener 80 is subsequently rotated about its axis, then the annular disk 90 can be screwed entirely through the opening of the attached part. Afterward, the attached part is located between the flange 85 and the annular disk 90, with the result that the fastener is securely connected to the attached part for further handling and final installation. If the fastener 80 is screwed onto a stud of the support part in order to fasten the attached part to a support part, then the annular disk 90 is clamped between the attached part and the support part, thus forming an elastomeric intermediate layer that acoustically decouples the parts from one another.

The connection between the annular disk 90 and the guide section 88 can be designed such that the annular disk 90 is separated when the fastener 80 is tightened or when the guide section 88 is later released. Such a separation has no effect on the sound isolation. However, the annular disk 90 can then remain on the stud when the fastener is released, and the fastener 80 can be used again in reassembly.

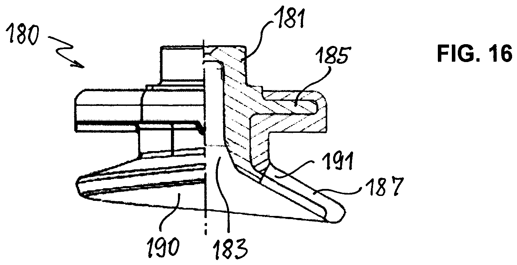

Figure 16 shows a variant 180 of the fastener 80, in which the annular disk 190, which is arranged at a distance from the flange 185 and surrounds the edge of the insertion opening 183, is composed of the supporting body 181. The annular disk 190 is likewise interrupted at one point by a slot 191 and shaped in the manner of a helical surface in such a manner that the edges of the slot 191 form an insertion opening for introducing the edge of the opening of an attached part or trim part. The side of the annular disk 190 facing the flange 185 is covered by an outer layer composed of the damping element 187 so that the attached part or trim part is sound-isolated from the support part. In this embodiment, the annular disk 190 has greater stiffness and can clamp the fastener against the support part with a greater axial preloading force.

## Claims

1. Fastener for fastening an attached part or trim part provided with an opening to a stud of a support part, having a supporting body (11, 41, 81, 181) that has a hole (12, 42, 82, 182), which extends along an axis and is provided at one end with an insertion opening (13, 43, 83, 183) to accommodate the stud, and has a flange (15, 45, 85, 185) projecting outward from the supporting body (11, 41, 81, 181), and having a damping element (20, 54, 87, 187) that covers the flange (15, 45, 85, 185) on the side facing the insertion opening (13, 43, 83, 183) with a contact section (22, 56) and has, extending from the contact section (22, 56) in the axial direction beyond the end of the supporting body (11, 41, 81, 181) that forms the edge of the insertion opening (13, 43, 83, 183), an extension (23, 55) that is designed to project through the opening in the attached part or trim part, wherein the supporting body (11, 41, 81, 181) is made of a rigid plastic and the damping element (20, 54, 87, 187) is made of a flexible, elastomeric plastic or rubber **characterized in that** the damping element (20, 54, 87, 187) is connected to the supporting body (11, 41, 81, 181) by primary forming, wherein the contact section (22) of the damping element (20) has a flat surface (24) on the side facing the insertion opening (13) on which are located multiple raised contact ribs (25) that are spaced apart from one another.

2. Fastener according to claim 1, **characterized in that** the damping element (20, 54, 87, 187) surrounds the flange (15, 45, 85, 185) with a layer on all sides.

3. Fastener according to one of the preceding claims, **characterized in that** the extension (23) takes the form of a wall with a cylindrical lateral surface (26) divided by slots (27) running in the axial direction.

4. Fastener according to claim 3, **characterized in that** the extension (23) has at least one groove (28) running in the circumferential direction and located in the cylindrical lateral surface (26) at a distance from the free end of the extension (23).

5. Fastener according to one of claims 3 or 4, **characterized in that** the inner surface (29) of the extension (23) in the part extending beyond the end of the supporting body (11) has a conical section whose inside diameter increases with increasing distance from the end of the supporting body (11).

6. Fastener according to one of the preceding claims, **characterized in that** the extension (55) of the damping element (54) has a guide section (58) adjoining the contact section (56) and closely surrounding an end section of the supporting body (41), and has a support section (59) that protrudes from the end of the supporting body (41).

7. Fastener according to claim 6, **characterized in that** the guide section (58) has a cylindrical lateral surface from which project multiple centering knobs (66) arranged at a distance from one another.

8. Fastener according to one of claims 6 or 7, **characterized in that** the support section (59) forms an annular flange (61) that extends radially outward from the guide section (58), that has a shoulder surface (62) located opposite the contact section (56), and that has on the opposite side a truncated conical surface (63) tapering toward the free end of the support section (56).

9. Fastener according to claim 8, **characterized in that** the annular flange (61) has, on the side opposite the shoulder surface (62), a flat face (64) with multiple raised contact ribs (65).

10. Fastener according one of claims 8 or 9, **characterized in that** radially outward extending tabs (71) are located on at least two diametrically opposed sides of the annular flange (61).

11. Fastener according to claim 10, **characterized in that** the tabs (71) are inclined toward a plane perpendicular to the axis such that their distance from the contact section (56) increases radially toward the outside.

12. Fastener according one of claims 6 or 7, **characterized in that** the support section (89) takes the form of an annular disk (90) that is interrupted at one point by a radial slot (91) and is shaped in the manner of a helical surface, wherein the edges (92, 93) of the slot (91) form an insertion opening for the introduction of the edge of the opening of an attached part or trim part.

13. Fastener according to one of claims 1 or 2, **characterized in that** the supporting body (181) is provided with an annular disk (190) that is arranged at a distance from the flange (185) and surrounds the edge of the insertion opening (183), which disk is interrupted at one point by a slot (191) and is shaped in the manner of a helical surface, wherein the edges of the slot (191) form an insertion opening for the introduction of the edge of the opening of an attached part or trim part.

14. Fastener according to claim 13, **characterized in that** the side of the annular disk (190) facing the flange (185) is covered with an outer layer formed by the damping element (187).

15. Fastener according to one of the preceding claims, **characterized in that** the supporting body (11) has a tool engagement region (16) on the side of the flange (15) facing away from the insertion opening (13).

16. Fastener according to claim 15, **characterized in that** the tool engagement region (16) has multiple, in particular six, flat side faces (17) and an end face (14) that closes off the hole (12), in the manner of an equilateral, straight prism, and **in that** mutually communicating grooves (31) that contain extensions (30) of the damping element (20) are formed in the end face (14) and in at least one of the side faces (17).

17. Fastener according to one of the preceding claims, **characterized in that** at least one locking finger (46) and at least one support surface (49) located opposite the locking finger (46) are arranged in the hole (42) of the supporting body (41).

## Patentansprüche

1. Befestigungselement zum Befestigen eines Anbauteils oder Verkleidungsteils, das mit einer Öffnung für einem Bolzen eines Stützteils versehen ist, aufweisend einen Stützkörper (11, 41, 81, 181), der ein Loch (12, 42, 82, 182), das sich entlang einer Achse erstreckt und an einem Ende mit einer Einführöffnung (13, 43, 83, 183) versehen ist, um den Bolzen aufzunehmen, und einen Flansch (15, 45, 85, 185), der vom Stützkörper (11, 41, 81, 181) nach außen vorsteht, aufweist, und aufweisend ein Dämpfungselement (20, 54, 87, 187), das den Flansch (15, 45, 85, 185) auf der der Einführöffnung (13, 43, 83, 183) zugewandten Seite mit einem Kontaktabschnitt (22, 56) abdeckt und einen Fortsatz (23, 55) aufweist, der sich vom Kontaktabschnitt (22, 56) in axialer Richtung über das Ende des Stützkörpers (11, 41, 81, 181), das die Kante der Einführungsöffnung (13, 43, 83, 183) bildet, hinaus erstreckt und der so konstruiert ist, dass er sich durch die Öffnung im Anbauteil oder Verkleidungsteil hindurch erstreckt, wobei der Stützkörper (11, 41, 81, 181) aus einem starren Kunststoff besteht und das Dämpfungselement (20, 54, 87, 187) aus einem flexiblen, elastomeren Kunststoff oder Gummi besteht; **dadurch gekennzeichnet, dass** das Dämpfungselement (20, 54, 87, 187) durch Primärumformung mit dem Stützkörper (11, 41, 81, 181) verbunden ist, wobei der Kontaktabschnitt (22) des Dämpfungselements (20) auf der der Einführöffnung (13) zugewandten Seite eine flache Oberfläche (24) aufweist, auf der sich mehrere erhabene Kontaktrippen (25) befinden, die voneinander beabstandet sind.

2. Befestigungselement nach Anspruch 1, **dadurch gekennzeichnet, dass** das Dämpfungselement (20, 54, 87, 187) den Flansch (15, 45, 85, 185) allseitig mit einer Schicht umgibt.

3. Befestigungselement nach einem der voranstehenden Ansprüche, **dadurch gekennzeichnet, dass** der Fortsatz (23) die Form einer Wand mit einer zylindrischen Seitenfläche (26) hat, die durch in axialer Richtung verlaufende Schlitze (27) geteilt ist.

4. Befestigungselement nach Anspruch 3, **dadurch gekennzeichnet, dass** der Fortsatz (23) mindestens eine Nut (28) aufweist, die in Umfangsrichtung verläuft und sich in der zylindrischen Seitenfläche (26) beabstandet vom freien Ende des Fortsatzes (23) befindet.

5. Befestigungselement nach einem der Ansprüche 3 oder 4, **dadurch gekennzeichnet, dass** die Innenfläche (29) des Fortsatzes (23) in dem Teil, das sich über das Ende des Stützkörpers (11) hinaus erstreckt, einen konischen Abschnitt aufweist, dessen Innendurchmesser mit zunehmendem Abstand vom Ende des Stützkörpers (11) zunimmt.

6. Befestigungselement nach einem der voranstehenden Ansprüche, **dadurch gekennzeichnet, dass** der Fortsatz (55) des Dämpfungselements (54) einen Führungsabschnitt (58) aufweist, der an den Kontaktabschnitt (56) angrenzt und einen Endabschnitt des Stützkörpers (41) eng umgibt, und einen Stützabschnitt (59) aufweist, der aus dem Ende des Stützkörpers (41) herausragt.

7. Befestigungselement nach Anspruch 6, **dadurch gekennzeichnet, dass** der Führungsabschnitt (58) eine zylindrische Seitenfläche aufweist, aus der mehrere zueinander beabstandet angeordnete Zentrierknöpfe (66) herausragen.

8. Befestigungselement nach einem der Ansprüche 6 oder 7, **dadurch gekennzeichnet, dass** der Stützabschnitt (59) einen ringförmigen Flansch (61) bildet, der sich vom Führungsabschnitt (58) radial nach außen erstreckt und eine dem Kontaktabschnitt (56) gegenüberliegende Schulterfläche (62) aufweist, und der auf der gegenüberliegenden Seite eine abgeschnittene konische Oberfläche (63) aufweist, die sich zum freien Ende des Stützabschnitts (56) hin verjüngt.

9. Befestigungselement nach Anspruch 8, **dadurch gekennzeichnet, dass** der ringförmige Flansch (61) auf der der Schulterfläche (62) gegenüberliegenden Seite eine flache Fläche (64) mit mehreren erhabenen Kontaktrippen (65) aufweist.

10. Befestigungselement nach einem der Ansprüche 8 oder 9, **dadurch gekennzeichnet, dass** sich radial nach außen erstreckende Laschen (71) an mindestens zwei diametral gegenüberliegenden Seiten des ringförmigen Fflansches (61) befinden.

11. Befestigungselement nach Anspruch 10, **dadurch gekennzeichnet, dass** die Laschen (71) zu einer Ebene senkrecht zur Achse geneigt sind, so dass ihr Abstand vom Kontaktabschnitt (56) radial zur Außenseite hin zunimmt.

12. Befestigungselement nach einem der Ansprüche 6 oder 7, **dadurch gekennzeichnet, dass** der Stützabschnitt (89) die Form einer ringförmigen Scheibe (90) hat, die an einer Stelle durch einen radialen Schlitz (91) unterbrochen ist und in der Art einer spiralförmigen Oberfläche geformt ist, wobei die Kanten (92, 93) des Schlitzes (91) eine Einführöffnung zum Einführen der Kante der Öffnung eines Anbauteils oder Verkleidungsteils bilden.

13. Befestigungselement nach einem der Ansprüche 1 oder 2, **dadurch gekennzeichnet, dass** der Stützkörper (181) mit einer ringförmigen Scheibe (190) versehen ist, die beabstandet vom Flansch (185) angeordnet ist und die Kante der Einführöffnung (183) umgibt, wobei diese Scheibe an einer Stelle durch einen Schlitz (191) unterbrochen ist und in der Art einer spiralförmigen Oberfläche geformt ist, wobei die Kanten des Schlitzes (191) eine Einführöffnung zum Einführen der Kante der Öffnung eines Anbauteils oder Verkleidungsteils bilden.

14. Befestigungselement nach Anspruch 13, **dadurch gekennzeichnet, dass** die dem Flansch (185) zugewandte Seite der ringförmigen Scheibe (190) mit einer durch das Dämpfungselement (187) gebildeten Außenschicht bedeckt ist.

15. Befestigungselement nach einem der voranstehenden Ansprüche, **dadurch gekennzeichnet, dass** der Stützkörper (11) auf der von der Einführöffnung (13) abgewandten Seite des Flansches (15) einen Werkzeugeingriffsbereich (16) aufweist.

16. Befestigungselement nach Anspruch 15, **dadurch gekennzeichnet, dass** der Werkzeugeingriffsbereich (16) mehrere, insbesondere sechs, flache Seitenflächen (17) und eine Stirnfläche (14) aufweist, die das Loch (12) nach Art eines gleichseitigen, geraden Prismas verschließt, und wobei in der Stirnfläche (14) und in mindestens einer der Seitenflächen (17) miteinander verbundene Rillen (31) ausgebildet sind, die Fortsätze (30) des Dämpfungselements (20) enthalten.

17. Befestigungselement nach einem der voranstehenden Ansprüche, **dadurch gekennzeichnet, dass** in dem Loch (42) des Stützkörpers (41) mindestens ein Verriegelungsfinger (46) und mindestens eine dem Verriegelungsfinger (46) gegenüberliegende Stützfläche (49) angeordnet sind.

## Revendications

1. Dispositif de fixation permettant de fixer une pièce attachée ou une pièce de garniture munie d'une ouverture sur un goujon d'une pièce de support, présentant un corps de support (11, 41, 81, 181) qui présente un trou (12, 42, 82, 182), lequel s'étend le long d'un axe et est muni à une extrémité d'une ouverture d'insertion (13, 43, 83, 183) destinée à loger le goujon, et présente une bride (15, 45, 85, 185) faisant saillie vers l'extérieur du corps de support (11, 41, 81, 181), et présentant un élément d'amortissement (20, 54, 87, 187) qui recouvre la bride (15, 45, 85, 185) du côté orienté vers l'ouverture d'insertion (13, 43, 83, 183) d'une section de contact (22, 56) et présente, s'étendant à partir de la section de contact (22, 56) dans la direction axiale au-delà de l'extrémité du corps de support (11, 41, 81, 181) qui forme le bord de l'ouverture d'insertion (13, 43, 83, 183), une extension (23, 55) qui est conçue pour faire saillie à travers l'ouverture dans la pièce attachée ou pièce de garniture, le corps de support (11, 41, 81, 181) étant constitué d'un plastique rigide et l'élément d'amortissement (20, 54, 87, 187) étant constitué d'un plastique ou caoutchouc élastomère et flexible, **caractérisé en ce que** l'élément d'amortissement (20, 54, 87, 187) est relié au corps de support (11, 41, 81, 181) par formage primaire, la section de contact (22) de l'élément d'amortissement (20) présentant une surface plate (24) sur le côté faisant face à l'ouverture d'insertion (13) sur laquelle se trouvent de multiples nervures de contact surélevées (25) qui sont espacées les unes des autres.

2. Dispositif de fixation selon la revendication 1, **caractérisé en ce que** l'élément d'amortissement (20, 54, 87, 187) entoure la bride (15, 45, 85, 185) d'une couche sur tous les côtés.

3. Dispositif de fixation selon l'une quelconque des revendications précédentes, **caractérisé en ce que** l'extension (23) prend la forme d'une paroi dotée d'une surface latérale cylindrique (26) divisée par des fentes (27) suivant la direction axiale.

4. Dispositif de fixation selon la revendication 3, **caractérisé en ce que** l'extension (23) présente au moins une rainure (28) suivant la direction circonférentielle et se trouvant dans la surface latérale cylindrique (26) à distance de l'extrémité libre de l'extension (23).

5. Dispositif de fixation selon l'une quelconque des revendications 3 ou 4, **caractérisé en ce que** la surface intérieure (29) de l'extension (23) dans la partie s'étendant au-delà de l'extrémité du corps de support (11) présente une section conique dont le diamètre intérieur augmente avec l'augmentation de la distance à partir de l'extrémité du corps de support (11).

6. Dispositif de fixation selon l'une quelconque des revendications précédentes, **caractérisé en ce que** l'extension (55) de l'élément d'amortissement (54) présente une section de guidage (58) attenante à la section de contact (56) et entourant étroitement une section d'extrémité du corps de support (41), et présente une section de support (59) qui fait saillie à partir de l'extrémité du corps de support (41).

7. Dispositif de fixation selon la revendication 6, **caractérisé en ce que** la section de guidage (58) présente une surface latérale cylindrique à partir de laquelle de multiples boutons de centrage (66) disposés de manière espacée les uns des autres font saillie.

8. Dispositif de fixation selon l'une quelconque des revendications 6 ou 7, **caractérisé en ce que** la section de support (59) forme une bride annulaire (61) qui s'étend radialement vers l'extérieur à partir de la section de guidage (58), qui présente une surface d'épaulement (62) se trouvant face à la section de section (56), et qui présente, sur le côté opposé, une surface conique tronquée (63) se rétrécissant vers l'extrémité libre de la section de support (56).

9. Dispositif de fixation selon la revendication 8, **caractérisé en ce que** la bride annulaire (61) présente, sur le côté opposé à la surface d'épaulement (62), une face plate (64) à multiples nervures de contact surélevées (65).

10. Dispositif de fixation selon l'une quelconque des revendications 8 ou 9, **caractérisé en ce que** des languettes (71) s'étendant radialement vers l'extérieur se trouvent sur au moins deux côtés diamétralement opposés de la bride annulaire (61).

11. Dispositif de fixation selon la revendication 10, **caractérisé en ce que** les languettes (71) sont inclinées vers un plan perpendiculaire à l'axe de sorte que leur distance par rapport à la section de contact (56) augmente radialement vers l'extérieur.

12. Dispositif de fixation selon l'une quelconque des revendications 6 ou 7, **caractérisé en ce que** la section de support (89) se présente sous la forme d'un disque annulaire (90) interrompu en un point par une fente radiale (91) et façonné à la manière d'une surface hélicoïdale, les bords (92, 93) de la fente (91) formant une ouverture d'insertion pour l'introduction du bord de l'ouverture d'une pièce attachée ou d'une pièce de garniture.

13. Dispositif de fixation selon l'une quelconque des revendications 1 ou 2, **caractérisé en ce que** le corps de support (181) est muni d'un disque annulaire (190) disposé à distance de la bride (185) et entourant le bord de l'ouverture d'insertion (183), lequel disque est interrompu en un point par une fente (191) et est façonné à la manière d'une surface hélicoïdale, les bords de la fente (191) formant une ouverture d'insertion pour l'introduction du bord de l'ouverture d'une pièce attachée ou d'une pièce de garniture.

14. Dispositif de fixation selon la revendication 13, **caractérisé en ce que** le côté du disque annulaire (190) orienté vers la bride (185) est recouvert d'une couche extérieure formée par l'élément d'amortissement (187).

15. Dispositif de fixation selon l'une quelconque des revendications précédentes, **caractérisé en ce que** le corps de support (11) présente une région (16) de mise en prise d'outil sur le côté de la bride (15) opposée à l'ouverture d'insertion (13).

16. Dispositif de fixation selon la revendication 15, **caractérisé en ce que** la région (16) de mise en prise d'outil présente de multiples, en particulier six, faces latérales plates (17) et une face d'extrémité (14) qui ferme le trou (12), à la manière d'un prisme droit équilatéral, et **en ce que** des rainures (31) communiquant entre elles qui contiennent des extensions (30) de l'élément d'amortissement (20) sont formées dans la face d'extrémité (14) et dans au moins l'une des faces latérales (17).

17. Dispositif de fixation selon l'une quelconque des revendications précédentes, **caractérisé en ce qu'**au moins un doigt de verrouillage (46) et au moins une surface de support (49) se trouvant face au doigt de verrouillage (46) sont disposés dans le trou (42) du corps de support (41).
